# EUROPEAN PATENT APPLICATION

(11) **EP 4 733 642 A1**
(43) Date of publication of application: **29.04.2026**
(21) Application number: 24825030.0
(22) Date of filing: 11.05.2024
(51) Int. Cl.: F16K 11/00, F16K 11/065, B29C 45/14, F16K 27/04, F16K 27/00, B23K 1/008, B23K 1/005

(54) **REVERSING VALVE AND METHOD FOR PRODUCING REVERSING VALVE**

(30) Priority: 21.06.2023 CN 202310750396; 21.06.2023 CN 202310748608
(71) Applicant: Zhejiang Dunan Artificial Environment Co., Ltd., Shaoxing Zhejiang 311800 (CN)
(72) Inventor: SHAO, Jucan, Shaoxing, Zhejiang 311800 (CN); LIU, Haibo, Shaoxing, Zhejiang 311800 (CN)
(74) Representative: Petraz, Gilberto Luigi
(86) International application number: PCT/CN2024/092627
(87) International publication number: WO 2024/260133

(57) **Abstract**

A reversing valve and a method for producing a reversing valve. The reversing valve comprises a valve body assembly (10a) and a valve seat assembly (20a), wherein the valve body assembly (10a) comprises a valve body (11a) and an inlet connecting pipe; the valve body (11a) is provided with a valve cavity and a mounting hole (111a), which is in communication with the valve cavity; the inlet connecting pipe is fixedly connected to the valve body (11a), and is in communication with the valve cavity; the valve seat assembly (20a) comprises a valve seat (21a) and an inlet and outlet connecting pipe; the valve seat (21a) is provided with a through hole (211a), the inlet and outlet connecting pipe is fixedly mounted on the valve seat (21a), and is in communication with the through hole (211a); and the valve seat (21a) is inserted into the mounting hole (111a), and a circumferential surface (214a) of the valve seat (21a) is fixedly connected to a hole wall of the mounting hole (111a).

## Description

### CROSS-REFERENCE TO RELATED APPLICATION

The present disclosure claims priority to Chinese Patent Application No. 202310750396.0, filed on June 21, 2023 and titled "Reversing Valve and Method for Producing Reversing Valve", and Chinese Patent Application No. 202310748608.1, filed on June 21, 2023 and titled "Valve Seat Assembly, Reversing Valve, and Method for Producing Valve Seat and Reversing Valve", which are incorporated herein by reference in their entireties.

### TECHNICAL FIELD

The present disclosure relates to a reversing valve and a method for producing a reversing valve.

### BACKGROUND

A reversing valve, such as a four-way valve, is commonly used in a refrigeration system to change flow direction of a refrigerant, enabling switch between a cooling mode and a heating mode. In the related art, the reversing valve includes a valve body and a valve seat; the valve body has a valve cavity and is provided with an inlet for mounting an inlet connecting pipe; and the valve seat has a D-shaped cross-section and is provided with a plurality of through holes for mounting inlet-outlet connecting pipes. During assembly, the valve seat is inserted into the valve cavity from an end of the valve body, an arc-shaped surface of the valve seat is in contact with a cavity wall of the valve cavity, and a sealing surface (opposite to the arc-shaped surface) of the valve seat faces the inlet. Meanwhile, the inlet connecting pipe is connected to the inlet, and the inlet-outlet connecting pipes are connected to the corresponding through holes. Finally, all assembled parts including the valve body, the valve seat, the inlet connecting pipe, and the inlet-outlet connecting pipes are placed together into a brazing furnace for furnace brazing. This method necessitates assembling a large number of parts at once, resulting in a complex operation and a high risk of part fall-off.

### SUMMARY

An objective of the present disclosure is to provide a reversing valve and a method for manufacturing the reversing valve, to solve the technical problem in the related art that, during assembly of the existing reversing valve, the valve seat first needs to be inserted into the valve cavity from the end of the valve body, and then all assembled parts including the valve body, the valve seat, the inlet connecting pipe, and the inlet-outlet connecting pipes are placed together into the brazing furnace for furnace brazing, resulting in a large number of parts to be assembled at once, a complex operation, and a high risk of part fall-off.

According to one aspect of the present disclosure, the present disclosure provides a reversing valve, including: a valve body assembly including a valve body and an inlet connecting pipe, in which the valve body has a valve cavity and a mounting hole in communication with the valve cavity, and the inlet connecting pipe is fixedly connected to the valve body and is in communication with the valve cavity; and a valve seat assembly including a valve seat and an inlet-outlet connecting pipe, in which the valve seat is provided with a through hole, the inlet-outlet connecting pipe is fixedly mounted on the valve seat and is in communication with the through hole; the valve seat is inserted into the mounting hole, and a circumferential surface of the valve seat is fixedly connected to a hole wall of the mounting hole.

In an embodiment of the present disclosure, the valve seat is provided with an upper surface and a lower surface, the upper surface and the lower surface are respectively located on two sides of the circumferential surface of the valve seat, the lower surface faces an interior of the valve body, and the upper surface is parallel to the lower surface.

In an embodiment of the present disclosure, an edge, connected to the lower surface, of the circumferential surface of the valve seat has at least a portion welded to the hole wall of the mounting hole.

In an embodiment of the present disclosure, the lower surface is a smooth plane.

In an embodiment of the present disclosure, a projection shape of the mounting hole onto a plane perpendicular to a depth direction of the mounting hole is a rectangle, a rounded rectangle, or an obround shape; the valve seat has at least one cross-section with a contour shape matching the projection shape of the mounting hole; and a cross-section of the valve seat is perpendicular to a depth direction of the through hole.

In an embodiment of the present disclosure, the reversing valve includes a sealing seat and a sliding block, in which the sealing seat is made of plastic, the sealing seat is integrated with the valve seat by injection molding, the sliding block is slidably mounted in the valve cavity, and the sealing seat is configured to form a seal with an open end face of the sliding block.

In an embodiment of the present disclosure, an outer surface of the valve seat and the sealing seat includes an upper surface, a lower surface, and a circumferential outer surface disposed in a surrounding manner between the upper surface and the lower surface; the upper surface is a surface of the sealing seat facing away from the valve seat and is a plane; the lower surface is a surface of the valve seat facing away from the sealing seat; and the through hole penetrates the upper surface and the lower surface.

In an embodiment of the present disclosure, the upper surface is parallel to the lower surface.

In an embodiment of the present disclosure, the valve seat is provided with a reinforcing portion, and a surface of the reinforcing portion is in contact with the sealing seat.

In an embodiment of the present disclosure, the valve seat has a first surface and a second surface opposite to each other, and a circumferential surface disposed in a surrounding manner between the first surface and the second surface; and the reinforcing portion includes a first reinforcing portion disposed on the first surface of the valve seat; and/or the reinforcing portion includes a second reinforcing portion disposed on the circumferential surface of the valve seat.

In an embodiment of the present disclosure, the reinforcing portion includes at least one of a blind hole, a through groove, an annular groove, or a protrusion.

In an embodiment of the present disclosure, the sliding block is made of metal or alloy.

Based on the above objective, the present disclosure further provides a method for producing a reversing valve, including steps: producing a valve body assembly; producing a valve seat assembly; and fixedly mounting the valve seat assembly onto the valve body assembly. The step of producing the valve body assembly includes: providing a valve body and an inlet connecting pipe, in which the valve body has a valve cavity, the valve body is provided with a mounting hole, and the mounting hole is in communication with the valve cavity; and fixedly connecting the inlet connecting pipe to the valve body, in which the inlet connecting pipe is in communication with the valve cavity. The step of producing the valve seat assembly includes: providing a valve seat and an inlet-outlet connecting pipe, a through hole being provided in the valve seat; and fixedly connecting the inlet-outlet connecting pipe to the valve seat, in which the inlet-outlet connecting pipe is in communication with the through hole. The step of fixedly mounting the valve seat assembly onto the valve body assembly includes: inserting the valve seat of the valve seat assembly into the mounting hole, and fixedly connecting a circumferential surface of the valve seat to a hole wall of the mounting hole.

In an embodiment of the present disclosure, in the step of fixedly connecting the inlet connecting pipe to the valve body to form the valve body assembly, the inlet connecting pipe is brazed to the valve body by furnace brazing.

In an embodiment of the present disclosure, in the step of fixedly connecting the inlet-outlet connecting pipe to the valve seat to form the valve seat assembly, the inlet-outlet connecting pipe is brazed to the valve seat by furnace brazing.

In an embodiment of the present disclosure, in the step of fixedly connecting the circumferential surface of the valve seat to the hole wall of the mounting hole, the circumferential surface of the valve seat is welded to the hole wall of the mounting hole by laser welding.

In an embodiment of the present disclosure, the step of producing the valve body assembly further includes: providing a short connecting pipe; and brazing the short connecting pipe and the inlet connecting pipe to the valve body by furnace brazing.

In an embodiment of the present disclosure, the step of producing the valve seat assembly further includes: providing a short connecting pipe; and brazing the short connecting pipe and the inlet-outlet connecting pipe to the valve seat by furnace brazing.

In an embodiment of the present disclosure, after the step of fixedly connecting the inlet-outlet connecting pipe to the valve seat, the method further includes: injection-molding a sealing seat onto the valve seat.

In an embodiment of the present disclosure, in the step of providing the valve seat, the valve seat is formed with a reinforcing portion, and the reinforcing portion includes at least one of a blind hole, a through groove, an annular groove, or a protrusion.

In an embodiment of the present disclosure, the method further includes: providing a sliding block; and slidably mounting the sliding block in a valve cavity of the valve body assembly, in which a seal is formed between the sealing seat and an open end face of the sliding block.

The beneficial effects of the present disclosure are mainly as follows:

For the valve assembly according to the present disclosure, the valve body assembly and the valve seat assembly may be assembled separately, the valve seat is then inserted into the mounting hole, and the circumferential surface of the valve seat is fixedly connected to the hole wall of the mounting hole, so that the number of parts to be assembled at once may be reduced, the operation process may be simplified, and the risk of part fall-off may be lowered. Specifically, the inlet connecting pipe is fixedly connected to the valve body; the inlet-outlet connecting pipe is fixedly mounted on the valve seat and is in communication with the through hole; the valve seat fixedly mounted with the inlet-outlet connecting pip is inserted into the mounting hole; and the circumferential surface of the valve seat is fixedly connected to the hole wall of the mounting hole.

### BRIEF DESCRIPTION OF THE DRAWINGS

The above and other features and advantages of the present disclosure will become clearer by describing exemplary embodiments in detail with reference to the accompanying drawings.
FIG. 1 is a left view of a reversing valve in the related art;
FIG. 2 is a schematic structural view of a reversing valve according to an embodiment of the present disclosure;
FIG. 3 is a left view of a reversing valve according to an embodiment of the present disclosure;
FIG. 4 is a schematic structural view of a valve body in an embodiment of the present disclosure;
FIG. 5 is a schematic structural view of a valve body assembly in an embodiment of the present disclosure;
FIG. 6 is a schematic structural view of a valve seat in an embodiment of the present disclosure;
FIG. 7 is a schematic structural view of a valve seat assembly in an embodiment of the present disclosure;
FIG. 8 is a flowchart of a method for producing a reversing valve according to an embodiment of the present disclosure.
FIG. 9 is a schematic structural view of a valve seat assembly according to an embodiment of the present disclosure;
FIG. 10 is another schematic structural view of a valve seat assembly according to an embodiment of the present disclosure;
FIG. 11 is a schematic structural view of a valve seat in a valve seat assembly according to an embodiment of the present disclosure;
FIG. 12 is another schematic structural view of a valve seat in a valve seat assembly according to an embodiment of the present disclosure;
FIG. 13 is a third schematic structural view of a valve seat in a valve seat assembly according to an embodiment of the present disclosure;
FIG. 14 is a front view of the valve seat shown in FIG. 13;
FIG. 15 is a fourth schematic structural view of a valve seat in a valve seat assembly according to an embodiment of the present disclosure;
FIG. 16 is a front view of the valve seat shown in FIG. 15;
FIG. 17 is an enlarged view at A in FIG. 16;
FIG. 18 is a schematic view showing cooperation between a valve seat assembly and a sliding block according to an embodiment of the present disclosure;
FIG. 19 is a schematic structural view of a reversing valve according to an embodiment of the present disclosure;
FIG. 20 is a schematic view of an internal structure of a reversing valve according to an embodiment of the present disclosure;
FIG. 21 is a schematic structural view of a valve body assembly in a reversing valve according to an embodiment of the present disclosure;
FIG. 22 is a schematic structural view of a valve body according to an embodiment of the present disclosure;
FIG. 23 is a schematic structural view of a sliding block according to an embodiment of the present disclosure;
FIG. 24 is a flowchart of a method for producing a valve seat assembly according to an embodiment of the present disclosure;
FIG. 25 is another flowchart of a method for producing a valve seat assembly according to an embodiment of the present disclosure;
FIG. 26 is a schematic structural view of a valve seat assembly prepared according to step S1038 in FIG. 25 in a state where a sealing seat is not yet injection-molded;
FIG. 27 is a schematic view showing a sealing seat injection-molded based on the structure shown in FIG. 26;
FIG. 28 is a flowchart of a method for producing a reversing valve according to an embodiment of the present disclosure.

Reference numerals:
1', valve body; 2', D-shaped valve seat; 3', sliding block; 10a, valve body assembly; 11a, valve body; 111a, mounting hole; 112a, connecting port; 12a, D-connecting pipe; 13a, D-short connecting pipe; 14a, E-short connecting pipe; 15a, C-short connecting pipe; 16a, copper sleeve; 20a, valve seat assembly; 21a, valve seat; 211a, through hole; 212a, upper surface; 213a, lower surface; 214a, circumferential surface; 2141a, edge; 22a, S-connecting pipe; 23a, E-connecting pipe; 24a, C-connecting pipe; 25a, S-short connecting pipe; 30a, sliding block;
1b, valve seat assembly; 1ab, upper surface; 11b, valve seat; 11bb, first surface; 111b, through hole; 112b, first reinforcing portion; 113b, second reinforcing portion; 12b, sealing seat; 13b, S-connecting pipe; 14b, E-connecting pipe; 15b, C-connecting pipe; 16b, S-short connecting pipe; 17b, copper sleeve; 2b, sliding block; 21b, flange; 3b, valve body assembly; 31b, valve body; 311b, mounting hole; 312b, connecting port; 32b, D-connecting pipe; 33b, D-short connecting pipe; 34b, E-short connecting pipe; 35b, C-short connecting pipe.

### DETAILED DESCRIPTION

Exemplary embodiments will be now described more fully with reference to the accompanying drawings. However, the exemplary embodiments may be implemented in a variety of forms and should not be construed as being limited to the embodiments set forth herein. Although relative terms such as "above" and "below" are used herein to describe the relationship of one component relative to another component, such terms are used herein only for the sake of convenience, for example, in accordance with exemplary orientations depicted in the accompanying drawings. It can be understood that if the referenced device is inversed upside down, a component described as "above" will become a component described as "below". Other relative terms such as "top" and "bottom" also have similar meanings. When a structure is described as "above" another structure, it probably means that the structure is integrally formed on another structure, or the structure is "directly" disposed on another structure, or the structure is "indirectly" disposed on another structure through an additional structure.

Terms "one," "a/an," "the" and "said" are used herein to indicate the presence of one or more elements/component parts/and others. Terms "including" and "having" have an inclusive meaning which means that there may be additional elements/component parts/and others in addition to the listed elements/component parts/and others. Terms such as "first" and "second" are used herein only as markers and do not limit the number of objects modified after them.

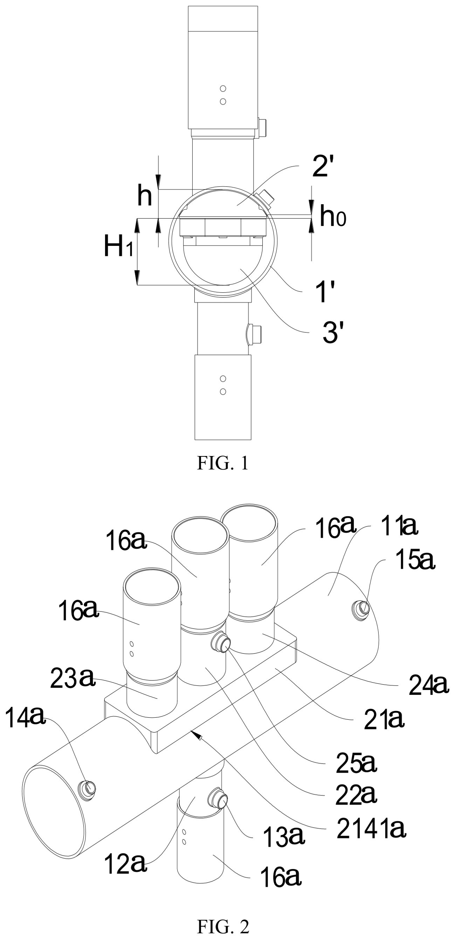

Referring to FIGS. 1 to 8, this embodiment provides a reversing valve including a valve body assembly 10a and a valve seat assembly 20a. The valve body assembly 10a includes a valve body 11a and an inlet connecting pipe. The valve body 11a has a valve cavity and a mounting hole 111a in communication with the valve cavity. The inlet connecting pipe is fixedly connected to the valve body 11a and is in communication with the valve cavity. The valve seat assembly 20a includes a valve seat 21a and inlet-outlet connecting pipes. The valve seat 21a is provided with a through hole 211a. The inlet-outlet connecting pipes are fixedly mounted on the valve seat 21a and are in communication with the through hole 211a. The valve seat 21a is inserted into the mounting hole 111a, and a circumferential surface 214a of the valve seat 21a is fixedly connected to a hole wall of the mounting hole 111a.

For the reversing valve provided in this embodiment, the valve body assembly 10a and the valve seat assembly 20a may be assembled separately, the valve seat 21a is then inserted into the mounting hole 111a, and the circumferential surface 214a of the valve seat 21a is fixedly connected to the hole wall of the mounting hole 111a. This approach reduces the number of parts required for a single assembly operation, simplifies the process, and reduces a risk of part fall-off. Specifically, the inlet connecting pipe is fixedly connected to the valve body 11a. The inlet-outlet connecting pipes are fixedly mounted on the valve seat 21a and connected to the through hole 211a. The valve seat 21a fixedly mounted with the inlet-outlet connecting pipes, is then inserted into the mounting hole 111a. The circumferential surface 214a of the valve seat 21a is fixedly connected to the hole wall of the mounting hole 111a.

In an embodiment, the valve seat assembly 20a and valve body assembly 10a are respectively brazed in a furnace. Compared to brazing all components-including the valve body, valve seat, and various connecting pipes-in the furnace as in the related art, this approach occupies less space, enabling the use of a brazing furnace with a smaller furnace opening.

The technical solution of this embodiment will be described in detail below using a four-way valve as an example of the reserving valve.

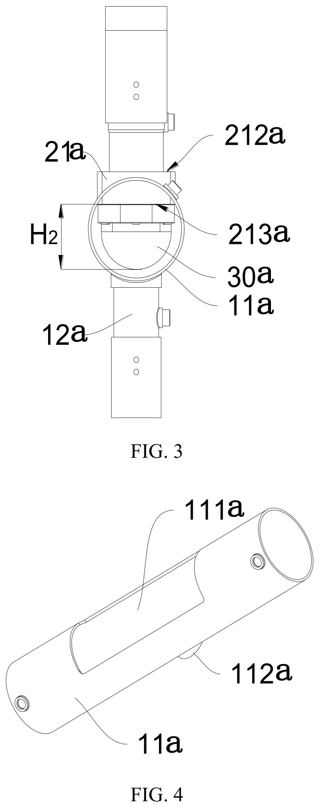

Referring to FIG. 4, the valve body 11a has a cylindrical tubular structure. A projection shape of the mounting hole 111a in a predetermined plane is a rectangle, a rounded rectangle, or an obround shape. The predetermined plane is a plane perpendicular to a depth direction of the mounting hole 111a. The valve seat 21a has at least one cross-section with a contour shape matching the projection shape of the mounting hole 111a. The cross-section of the valve seat 21a is perpendicular to a depth direction of the through hole 211a and parallel to the predetermined plane.

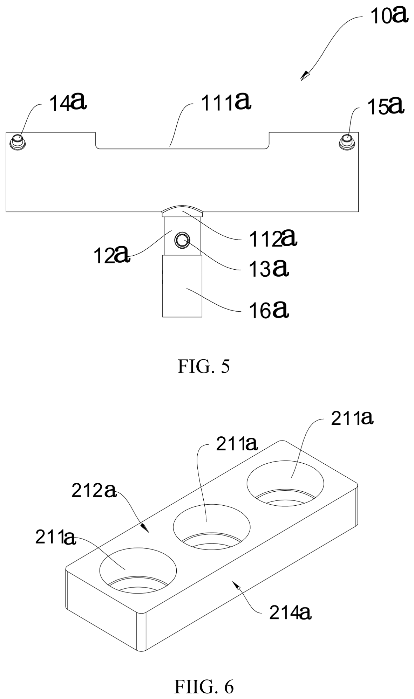

In this embodiment, as shown in FIG. 6, the valve seat 21a is a rectangular plate-like or block-like structure having a uniform thickness. The circumferential surface 214a of the valve seat 21a is perpendicular to a lower surface 213a of the valve seat 21a (as shown in FIG. 3). Therefore, the contour shape of each cross-section of the valve seat 21a matches the shape of the projection of the mounting hole 111a.

It should be understood that the contour shapes of cross-sections at different positions of the valve seat 21a may also be different. It is sufficient for the contour shape of the cross-section at the position corresponding to the mounting hole 111a to match the shape of the projection of the mounting hole 111a when the valve seat 21a is aligned with the mounting hole 111a and inserted into a specific position within the mounting hole 111a, so as to facilitate welding and sealing between the valve seat 21a and the valve body 11a.

It should be noted that a shape of the valve seat 21a may be determined according to a shape of the mounting hole 111a, or conversely, the shape of the mounting hole 111a may be determined according to the shape of the valve seat 21a.

In an embodiment, as shown in FIG. 2, the inlet-outlet connecting pipes include an S-connecting pipe 22a, an E-connecting pipe 23a, and a C-connecting pipe 24a. The S-connecting pipe 22a is positioned between the E-connecting pipe 23a and the C-connecting pipe 24a, and corresponds to the inlet connecting pipe. As shown in FIG. 3, the reversing valve further includes a sliding block 30a. The sliding block 30a is movable within the valve cavity to allow the inlet connecting pipe to be in communication with the E-connecting pipe 23a or the C-connecting pipe 24a.

As shown in FIGS. 5 to 6, the valve seat 21a is provided with three through holes 211a. The three through holes 211a are spaced apart in the length direction of the valve seat 21a. One end of the S-connecting pipe 22a is welded to the through hole 211a in the middle, and the E-connecting pipe 23a and the C-connecting pipe 24a are respectively welded to the through holes 211a at two ends. For the four-way valve, the inlet connecting pipe is a D-connecting pipe 12a. The D-connecting pipe 12a is mounted on a connecting port 112a located on a side of the valve body 11a away from the mounting hole 111a, and corresponds to the position of the S-connecting pipe 22a.

The sliding block 30a is movable within the valve cavity to switch between different flow paths. For example, when the sliding block moves to an end of the valve body 11a close to the E-connecting pipe 23a as shown in FIG. 2, the D-connecting pipe 12a is in communication with the C-connecting pipe 24a, and the E-connecting pipe 23a is in communication with the S-connecting pipe 22a. When the sliding block 30a moves to the other end of the valve body shown in FIG. 2, the D-connecting pipe 12a is in communication with the E-connecting pipe 23a, and the C-connecting pipe 24a is in communication with the S-connecting pipe 22a.

It should be noted that the sliding block 30a is known in the related art, the structure of which will not be described in detail.

In an embodiment, the four-way valve further includes a pilot valve (not shown). The valve body assembly 10a and the valve seat assembly 20a each include short connecting pipes configured to be connected to capillary tubes of the pilot valve.

For example, as shown in FIG. 2, the short connecting pipes include a D-short connecting pipe 13a, an S-short connecting pipe 25a, an E-short connecting pipe 14a, and C-short connecting pipe 15a. The D-short connecting pipe 13a is welded and fixed to the D-connecting pipe 12a and is in communication therewith. The S-short connecting pipe 25a is welded and fixed to S-connecting pipe 22a and is in communication therewith. The E-short connecting pipe 14a is welded and fixed to the end of the valve body 11a close to the E-connecting pipe 23a and is in communication therewith; and the C-short connecting pipe 15a is welded and fixed to an end of the valve body 11a close to the C-connecting pipe 24a and is in communication therewith.

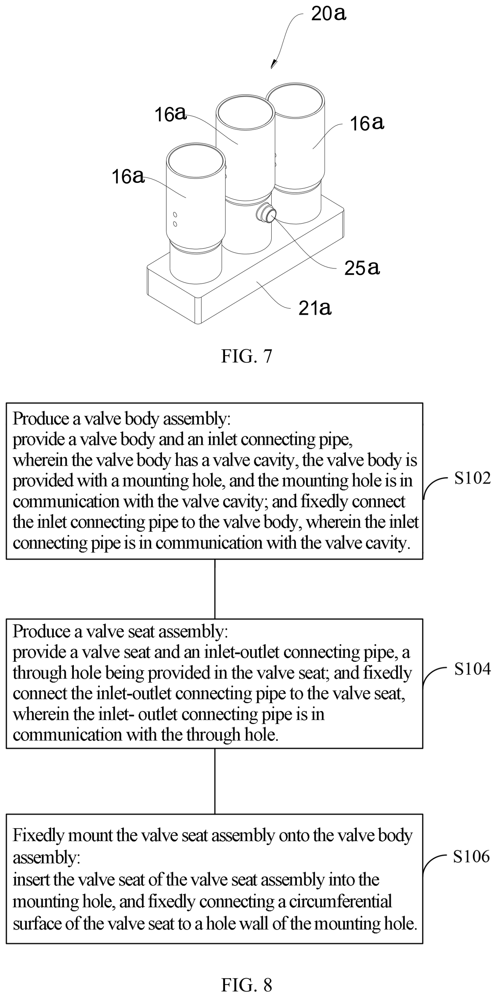

In an embodiment, as shown in FIG. 5, the valve body assembly 10a further includes a copper sleeve 16a connected to one end of the D-connecting pipe 12a. As shown in FIG. 7, the valve seat assembly 20a further includes copper sleeves 16a respectively connected to the S-connecting pipe 22a, the E-connecting pipe 23a, and the C-connecting pipe 24a.

In an embodiment, as shown in FIG. 6, the valve seat 21a has an upper surface 212a and a lower surface 213a. The upper surface 212a and the lower surface 213a are located on two sides of the circumferential surface 214a of the valve seat 21a, respectively. The lower surface 213a faces the interior of the valve body 11a, and the upper surface 212a is parallel to the lower surface 213a.

For example, the valve seat 21a is plate-shaped or block-shaped. The valve seat 21a has the upper surface 212a, the lower surface 213a, and the circumferential surface 214a disposed in a surrounding manner between the upper surface 212a and the lower surface 213a. The upper surface 212a is parallel to the lower surface 213a, ensuring that a thickness of an edge region of the valve seat 21a is substantially equal to a thickness of a central region of the valve seat 21a, thereby enhancing the deformation resistance of the valve seat 21a. Moreover, the upper surface 212a is flat, which facilitates machining, and there is no need to machine it into an arc-shaped surface as required in the related art.

It should be noted that the statement "the upper surface 212a is parallel to the lower surface 213a" in this embodiment refers to the upper surface 212a is substantially parallel to the lower surface 213a within a permissible tolerance.

It should be understood that, in this embodiment, a projection shape of the circumferential surface 214a onto a plane where the lower surface 213a is located may include, but is not limited to, a rectangle, a rounded rectangle, or an obround shape.

During the movement of the sliding block 30a, as shown in FIG. 3, a seal is formed between an open end face of the sliding block 30a and the lower surface 213a of the valve seat 21a. In order to enhance the sealing effect, the lower surface 213a of the valve seat 21a is a smooth plane.

For example, after the welding of the valve seat assembly 20a is completed, the lower surface 213a may be ground to form the smooth plane.

In the related art, since the D-shaped valve seat 2' is located within the valve cavity, it occupies a relatively large space in the valve cavity of the valve body 1. For example, as shown in FIG. 1, the existing D-shaped seat 2' has a height of h and an edge of the D-shaped seat 2' has a height of h₀, i.e., a minimum distance between a surface of the D-shaped seat 2' attached with the sliding block 3' and a cavity wall of the valve cavity is h₀, which is in a range of 1 mm to 6 mm. The sliding block 3' has a heigh of H₁.

In an embodiment, an edge where the circumferential surface 214a of the valve seat 21a is connected to the lower surface 213a of the valve seat 21a, has at least a portion welded to the hole wall of the mounting hole 111a.

In some embodiments, the edge where the circumferential surface 214a of the valve seat 21a is connected to the lower surface 213a of the valve seat 21a is welded to the hole wall of the mounting hole 111a by laser welding. As shown in FIG. 2, an edge 2141a where the circumferential surface 214a of the valve seat 21a is connected to a long side of the lower surface 213a of the valve seat 21a is overlapped with a hole wall of the mounting hole 111a extending in an axial direction of the valve body 11a, i.e., a distance between the lower surface 213a of the valve seat 21a and the hole wall of the mounting hole 111a extending in the axial direction of the valve body 11a is zero. That is, the valve seat 21a does not occupy space within the valve cavity. This ensures that a height of the sliding block 30a increases, while an inner diameter of the valve body 11a remains unchanged and an inner diameter of the D-connecting pipe 12a remains unchanged (i.e., a flow area of the fluid on a high-pressure side remains unchanged). Consequently, a flow area of the fluid on a low-pressure side is increased, enhancing the flow capacity of the four-way valve.

It should be noted that a short side (adjacent to the long side) of the lower surface of the valve seat 21a is misaligned with the hole wall extending in the axial direction of the valve body 11a. A circumferential surface where the short side of the lower surface of the valve seat 21a is located is welded to the hole wall extending in the axial direction of the valve body 11a.

For example, compared to the sliding block 3' in FIG. 1, a height H₂ of the sliding block 30a in this embodiment may be based on H₁ increased by h₀.

It should be understood that when the height of the sliding block 30a remains unchanged and the inner diameter of the D-connecting pipe 12a remains unchanged, the diameter of the valve body 11a may be appropriately reduced to achieve a purpose of cost reduction.

It should be noted that a portion of the circumferential surface 214a of the valve seat 21a may also be located within the valve cavity.

Additionally, it should be noted that the reversing valve may be a multi-way valve other than a four-way valve.

This embodiment also provides a method for producing a reversing valve, including the following steps:
producing a valve body assembly 10a;
producing a valve seat assembly 20a; and
fixedly mounting the valve seat assembly 20a onto the valve body assembly 10a;
in which:
   the step of producing the valve body assembly 10a includes:
   providing a valve body 11a and an inlet connecting pipe, in which the valve body 11a has a valve cavity, a mounting hole 111a is machined on the valve body 11a, and the mounting hole 111a is in communication with the valve cavity; and
   fixedly connecting the inlet connecting pipe to the valve body 11a, in which the inlet connecting pipe is in communication with the valve cavity;
   the step of producing the valve seat assembly 20a includes:
      providing the valve seat 21a and inlet-outlet connecting pipes, in which through holes 211a are machined in the valve seat 21a; and
      fixedly connecting the inlet-outlet connecting pipes to the valve seat 21a, in which the inlet-outlet connecting pipes are in communication with the through holes 211a;
      the step of fixedly mounting the valve seat assembly 20a onto the valve body assembly 10a includes:
         inserting the valve seat 21a in the valve seat assembly 20a into the mounting hole 111a, and fixedly connecting a circumferential surface 214a of the valve seat 21a to a hole wall of the mounting hole 111a.

In the method for producing the reversing valve provided in this embodiment, the valve body assembly 10a and the valve seat assembly 20a are assembled separately; and then the valve seat 21a is inserted into the mounting hole 111a, and the circumferential surface 214a of the valve seat 21a is fixedly connected to the hole wall of the mounting hole 111a. This approach reduces the number of parts required for a single assembly operation, simplifies the operation process, and reduces a risk of part fall-off. Specifically, the inlet connecting pipe is fixedly connected to the valve body 21; the inlet-outlet connecting pipes are fixedly mounted on the and in communication with the through holes 211a; and the valve seat 21a fixedly mounted with the inlet-outlet connecting pipes is inserted into the mounting hole 111a, and the circumferential surface 214a of the valve seat 21a is fixedly connected to the hole wall of the mounting hole 111a.

For example, the method for producing the reversing valve provided in this embodiment is used to produce the reversing valve provided in this embodiment.

The method for producing the reversing valve provided in this embodiment will be described in detail below by using a four-way valve as an example of the reserving valve.

Referring to FIG. 8, the method for producing the reversing valve provided in this embodiment includes the following steps.

Step S102, the valve body assembly 10a is produced.

In step S102, the step of producing the valve body assembly 10a includes:
The valve body 11a and the inlet connecting pipe are provided, in which the valve body 11a has the valve cavity, and the mounting hole 111a is machined on the valve body 11a, with the mounting hole 111a in communication with the valve cavity. For example, as shown in FIG. 4, the valve body 11a has a cylindrical tube structure, and the mounting hole 111a may be rectangular, rounded rectangular, or oval in shape. A connecting port 112a is machined on the valve body 11a. For example, the connecting port 112a is opposite to the mounting hole 111a, and is in communication with the valve cavity.

The inlet connecting pipe is fixedly connected to the valve body 11a, with the inlet connecting pipe in communication with the valve cavity.

Specifically, the inlet connecting pipe is a D-connecting pipe 12a. The D-connecting pipe 12a is fixedly mounted to the connecting port 112a.

Step S104, the valve seat assembly 20a is produced.

In step S104, the step of producing the valve seat assembly 20a includes:
The valve seat 21a and the inlet-outlet connecting pipes are provided, and the through holes 211a are machined in the valve seat 21a. For example, as shown in FIG. 6, three through holes 211a are machined in the valve seat 21a. The three through holes 211a are spaced apart in a length direction of the valve seat 21a. The inlet-outlet connecting pipes include an S-connecting pipe 22a, an E-connecting pipe 23a, and a C-connecting pipe 24a.

The inlet-outlet connecting pipes are fixedly connected to the valve seat 21a, with the inlet-outlet connecting pipes in communication with the through holes 211a. Specifically, the S-connecting pipe 22a is located between the E-connecting pipe 23a and the C-connecting pipe 24a, the S-connecting pipe 22a corresponds to the inlet connecting pipe; One end of the S-connecting pipe 22a is welded to the through hole 211a in the middle, a position of the S-connecting pipe 22a corresponds to a position of the D-connecting pipe 12a, and the E-connecting pipe 23a and the C-connecting pipe 24a are respectively welded to the through holes 211a at two ends.

Step S106, the valve seat assembly 20a is fixedly mount onto the valve body assembly 10a.

In step S106, the step of fixedly mounting the valve seat assembly 20a onto the valve body assembly 10a includes:
The valve seat 21a in the valve seat assembly 20a is inserted into the mounting hole 111a, and the circumferential surface 214a of the valve seat 21a is fixedly connected to the hole wall of the mounting hole 111a. For example, the valve seat 21a in the valve seat assembly 20a obtained in step S104 is inserted into the mounting hole 111a, and the circumferential surface 214a of the valve seat 21a is fixedly connected to the hole wall of the mounting hole 111a.

It should be noted that in actual production, the sequence of steps S102 and S104 may be interchanged or performed simultaneously.

In an embodiment, in the step of fixedly connecting the inlet connecting pipe to the valve body 11a, the inlet connecting pipe is brazed to the valve body 11a by using furnace brazing.

Specifically, the D-connecting pipe 12a is brazed to the connecting port 112a on the valve body 11a by using furnace brazing.

In an embodiment, the four-way valve further includes a pilot valve, the valve body assembly 10a and the valve seat assembly 20a each include short connecting pipes configured to be connected to capillary tubes of the pilot valve.

Therefore, in step S102, the step of producing the valve body assembly 10a further includes:
The short connecting pipes are provided. For example, the short connecting pipes in the valve body assembly 10a include a D-short connecting pipe 13a, an E-short connecting pipe 14a, and a C-short connecting pipe 15a.

In the step of fixedly connecting the inlet connecting pipe to the valve body 11a, the E-short connecting pipe and the inlet connecting pipe are brazed to the valve body 11a by using furnace brazing.

Specifically, The D-connecting pipe 12a is mounted onto the connecting port 112a of the valve body 11a, the D-short connecting pipe 13a is mounted at a corresponding position on the D-connecting pipe 12a, the E-short connecting pipe 14a is mounted at an end of the valve body 11a close to the E-connecting pipe 23a, and the C-short connecting pipe 15a is mounted at an end of the valve body 11a close to the C-connecting pipe 24a. And then they are placed together into a brazing furnace for brazing, thereby improving the production efficiency.

It should be noted that an end of the D-connecting pipe 12a of the four-way valve is further connected with a copper sleeve 16a, which may be mounted at one end of the D-connecting pipe 12a, and then they are placed together into the brazing furnace for brazing, thereby further enhancing the production efficiency.

In an embodiment, in the step of connecting the inlet-outlet connecting pipes to the valve seat 21a, the inlet-outlet connecting pipes are brazed to the valve seat 21a by using furnace brazing.

Specifically, the S-connecting pipe 22a, the E-connecting pipe 23a, and the C-connecting pipe 24a are brazed to their respective corresponding through holes 211a by using furnace brazing.

In an embodiment, the step of producing the valve seat assembly 20a further includes:
A short connecting pipe is provided. For example, the short connecting pipe in the valve seat assembly 20a includes an S-short connecting pipe 25a.

In the step of fixedly connecting the inlet-outlet connecting pipes to the valve seat 21a to form the valve seat assembly 20a, the short connecting pipe, the inlet-outlet connecting pipes are brazed to the valve seat 21a by using furnace brazing.

Specifically, the S-connecting pipe 22a, the E-connecting pipe 23a, and the C-connecting pipe 24a are respectively mounted into their respective corresponding through holes 211a, and the S-short connecting pipe 25a is mounted at the corresponding position of the S-connecting pipe 22a; and then they are placed together in the brazing furnace for brazing, thereby improving the production efficiency.

It should be noted that ends of the S-connecting pipe 22a, the E-connecting pipe 23a, and the C-connecting pipe 24a of the four-way valve are connected with copper sleeves 16a, respectively, each of which may be correspondingly mounted at the end of each of the S-connecting pipe 22a, the E-connecting pipe 23a, and the C-connecting pipe 24a, and then they are placed together in the brazing furnace for brazing, thereby further improving the production efficiency.

Certainly, the short connecting pipes may be welded to the copper sleeves 16a separately.

In an embodiment, in the step of fixedly connecting the circumferential surface 214a of the valve seat 21a to the hole wall of the mounting hole 111a, the circumferential surface 214a of the valve seat 21a is welded to the hole wall of the mounting hole 111a by using laser welding.

Specifically, the brazed valve seat assembly 20a and valve body assembly 10a are taken out from the brazing furnace, the valve seat 21a in the valve seat assembly 20a is then inserted into the mounting hole 111a, and the circumferential surface 214a of the valve seat is welded to the hole wall of the mounting hole 111a by using laser welding.

During actual production, after the brazed valve seat assembly 20a and valve body assembly 10a are taken out from the brazing furnace, the brazed valve seat assembly 20a and valve body assembly 10a may be first inspected. If welding quality issues are detected, since a flow soldering position of each connecting pipe is typically at the junction between the connecting pipe and the valve seat 21a, and may appear on the lower surface 213a of the valve seat 21a in a severe case, there is a large space for a grinding operation, and it is easy to rework. If deformation occurs on the surface of the valve seat 21a, it may be detected using tools such as a feeler gauge, The solder on the surface may be grinded off by using a grinding wheel, an electric grinder, or a file, so as to achieve the rework and the repair.

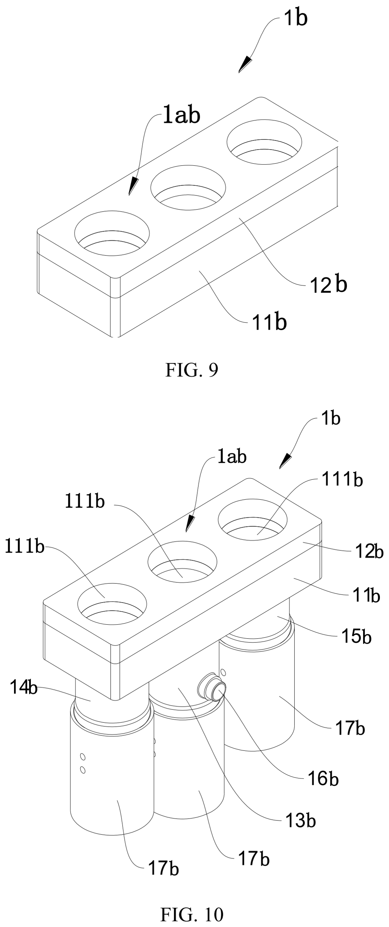

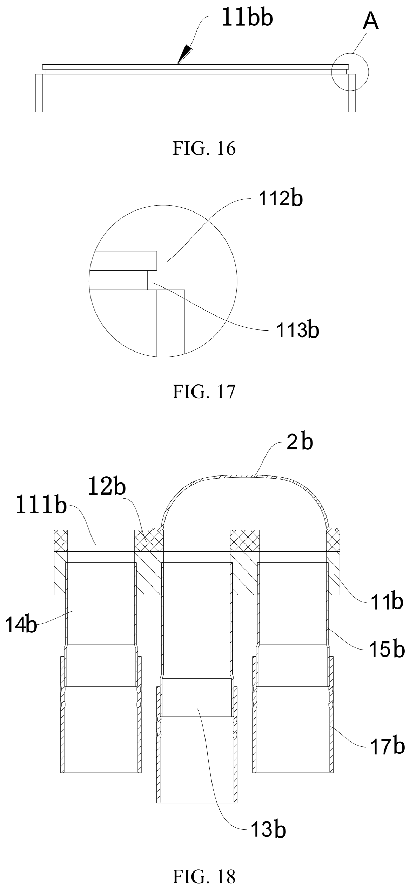

This embodiment provides a valve seat assembly 1b. Referring to FIG. 9, The valve seat assembly 1b provided in this embodiment includes a valve seat 11b and a sealing seat 12b. The valve seat 11b is configured to be connected to the valve body 31b. The sealing seat 12b is made of plastic and is integrated with the valve seat 11b by injection molding. The sealing seat 12b is configured to form a seal with an open end face of the sliding block 2b (as shown in FIG. 18).

In the valve seat assembly provided in this embodiment, the sealing seat 12b is integrated with the valve seat 11b by injection molding. The injection molding process is simple and straightforward. Since the sealing seat 12b is made of plastic, it is easy to achieve a high surface flatness, thereby meeting a sealing requirement. In use, the valve seat assembly 1b provided in this embodiment is mounted onto the valve body 31b of the reversing valve. When the sealing seat 12b forms the seal with the open end face of the sliding block 2b within the valve body 31b, the sliding block 2b can slide smoothly and steadily over the surface of the sealing seat 12b, which is not susceptible to shaking or abnormal noise, thereby reducing wear.

In an embodiment, the valve seat assembly 1b further includes the inlet-outlet connecting pipes. As shown in FIG. 3, the valve seat 11b is provided with a through hole 111b. The inlet-outlet connecting pipes are fixedly mounted on the valve seat 11b and are in communication with the through hole 111b.

The inlet-outlet connecting pipes include different numbers of connecting pipes. When the valve seat assembly 1b is applied to different types of reversing valves, the configuration of the inlet-outlet connecting pipes also varies. In this embodiment, taking a four-way valve as an example of the reversing valve, i.e., taking the valve seat assembly applied to the four-way valve as an example, the technical solution of this embodiment is illustrated in detail.

As shown in FIG. 10, the inlet-outlet connecting pipes include an S-connecting pipe 13b, an E-connecting pipe 14b, and a C-connecting pipe 15b. The S-connecting pipe 13b is located between the E-connecting pipe 14b and the C-connecting pipe 15b, and corresponds to the inlet connecting pipe of the four-way valve.

The valve seat 11b is provided with three through holes 111b. The three through holes 111b are spaced apart in a length direction of the valve seat 11b. An end of the S-connecting pipe 13b is welded to a through hole 111b in the middle, and the E-connecting pipe 14b and the C-connecting pipe 15b are respectively welded to the through holes 111b at two ends.

In an embodiment, the valve seat assembly 1b includes an S-short connecting pipe 16b configured to be connected to capillary tubes of a pilot valve of the four-way valve. For example, the S-short connecting pipe 16b is welded to and is in communication with the S-connecting pipe 13b.

In an embodiment, as shown in FIG. 10, the valve seat assembly 1b further includes copper sleeves 17b connected respectively to the S-connecting pipe 13b, the E-connecting pipe 14b, and the C-connecting pipe 15b.

In an embodiment, outer surfaces of the valve seat 11b and the sealing seat 12b includes an upper surface 1ab, a lower surface, and a circumferential outer surface disposed in a surrounding manner between the upper surface 1ab and the lower surface. The upper surface 1ab is a surface of the sealing seat 12b facing away from the valve seat 11b and is a smooth plane. The lower surface is a surface of the valve seat 11b facing away from the sealing seat 12b. The through holes 111b extending through the upper surface 1ab and the lower surface.

For example, the integrated valve seat 11b and sealing seat 12b as a whole is plate-like or block-like. Outer surfaces of this integrated structure include the upper surface 1ab, the lower surface, and the circumferential outer surface disposed in a surrounding manner between the upper surface 1ab and the lower surface. The upper surface 1ab is the surface of the sealing seat 12b facing away from the valve seat 11b and is a smooth plane. After the valve seat assembly 1b is mounted onto the valve body, the upper surface 1ab faces the interior of the valve body 31b and forms a seal with the open end face of the sliding block 2b. The lower surface is the surface of the valve seat 11b facing away from the sealing seat 12b. The circumferential outer surface includes a circumferential surface of the valve seat 11b and a circumferential surface of the sealing seat 12b.

In order to ensure the corresponding communication among the S-connecting pipe 13b, the E-connecting pipe 14b, the C-connecting pipe 15b, and the valve cavity, the through holes 111b extend through the upper surface 1ab and the lower surface. That is, during the injection molding of the sealing seat 12b, the through holes 111b will not blocked by an injection material.

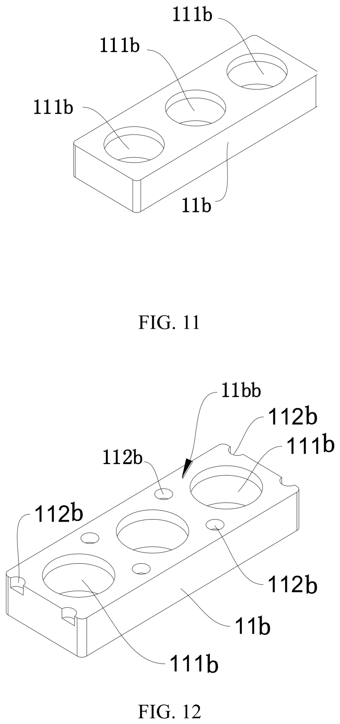

For example, as shown in FIG. 11, the through holes 111b are formed in the valve seat 11b before injection molding the sealing seat. This prevents damage to the sealing seat structure caused by post-molding machining of the through holes.

During the movement of the sliding block 2b, as shown in FIG. 18, the seal is formed between the open end face of sliding block 2b and the sealing seat 12b. In order to enhance sealing effect, the upper surface 1ab is a smooth plane.

In an embodiment, the upper surface 1ab is parallel to the lower surface. This configuration ensures that a thickness of the valve seat 11b at its edge is substantially equal to a thickness of the valve seat 11b at its central region, thereby improving the deformation resistance of the valve seat 11b. Moreover, the lower surface is flat, which facilitates machining, and there is no need to form it into an arc-shaped surface matching the inner wall of the valve cavity.

It should be noted that "the upper surface 1ab is parallel to the lower surface" in this embodiment refers to that the upper surface 1ab is substantially parallel to the lower surface within a permissible tolerance.

For example, the integrated valve seat 11b and sealing seat 12b as a whole form a rectangular plate or a block structure having a uniform thickness, and the circumferential outer surface is perpendicular to the lower surface.

It should be understood that, in this embodiment, a projection shape of the circumferential outer surface onto a plane where the lower surface is located may include, but is not limited to, a rectangle, a rounded rectangle, or an obround shape.

In an embodiment, the valve seat 11b is provided with a reinforcing portion, the surface of which is in contact with the sealing seat 12b.

By providing the reinforcing portion, the bond strength of the injection molding between the sealing seat 12b and the valve seat 11b is enhanced, preventing the sealing seat 12b from separating from the valve seat 11b. For example, the reinforcing portion includes at least one of a blind hole, a through groove, an annular groove, or a protrusion.

In an embodiment, as shown in FIGS. 12 to 17, the valve seat 11b has a first surface 11bb and a second surface disposed relative to each other, and a circumferential surface disposed between the first surface 11bb and the second surface. The reinforcing portion includes a first reinforcing portion 112b disposed on the first surface 11bb of the valve seat 11b, and/or the reinforcing portion includes a second reinforcing portion 113b disposed on the circumferential surface of the valve seat 11b.

Specifically, the first surface 11bb is a surface of the valve seat 11b close to the sealing seat 12b. After injection molding, the first surface 11bb is covered by the sealing seat 12b. The second surface is a surface of the valve seat 11b away from the sealing seat 12b, i.e., the second surface is the lower surface.

In one possible design, the reinforcing portion includes the first reinforcing portion 112b disposed on the first surface 11bb of the valve seat 11b. The number of first reinforcing portions 112b may be one or more.

For example, as shown in FIG. 12, the first reinforcing portion 112b may be a blind hole. It should be understood that the blind hole may be formed in a portion of the first surface 11bb excluding its edge. For example, a contour shape of the blind hole may be circular, rectangular, or elliptical. Alternatively, the blind hole may be formed at an edge of the first surface 11bb to form a notch, such as a semicircular notch.

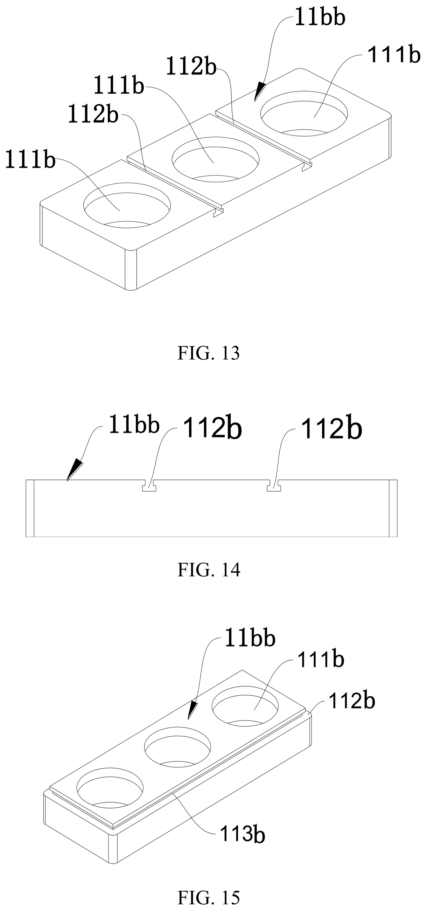

For example, the first reinforcing portion 112b may also be a through groove. For example, as shown in FIG. 13, a through groove is provided between each two adjacent through holes 111b. A length direction of the through groove is perpendicular to a line connecting the centers of the two adjacent through holes 111b, and two ends of the length direction of the through groove extending through the circumferential surface of the valve seat 11b. For example, as shown in FIG. 6, the through groove is a T-shaped slot. Certainly, the through groove may also be a straight slot or a dovetail slot.

For example, the first reinforcing portion 112b may also be an annular groove or a protrusion.

It should be noted that the first reinforcing portion 112b may include at least one of the blind hole, the through groove, the annular groove, or the protrusion.

In another possible design, the reinforcing portion includes a first reinforcing portion 112b disposed on a first surface 11bb of the valve seat 1lb and a second reinforcing portion 113b disposed on a circumferential surface of the valve seat 11b.

For example, as shown in FIGS. 15 to 17, the first reinforcing portion 112b is a first annular groove disposed at the edge of the first surface 11bb, the second reinforcing portion 113b is a second annular groove disposed at the circumferential surface, and the first annular groove and the second annular groove are interconnected.

In a third possible design, the reinforcing portion may also be solely configured as a second reinforcing portion 113b disposed on the circumferential surface of the valve seat 11b.

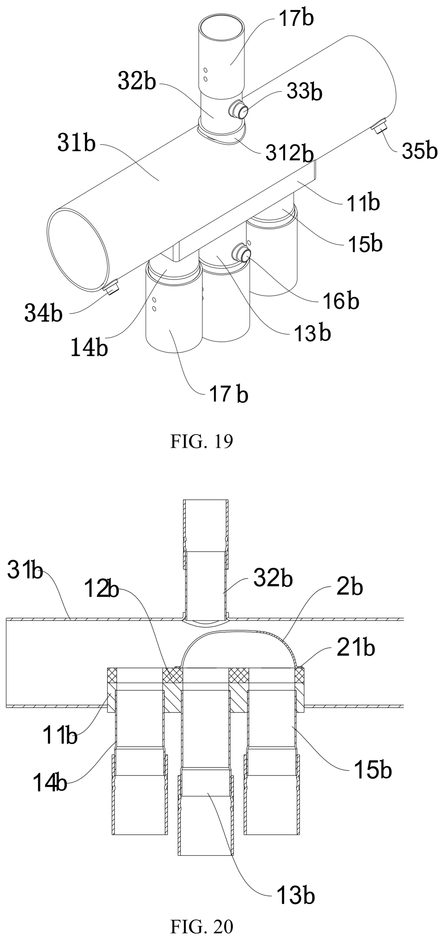

This embodiment also provides a reversing valve. As shown in FIGS. 19 and 20. The reversing valve includes a valve body assembly 3b, a sliding block 2b, and a valve seat assembly 1b provided in this embodiment. The valve body assembly 3b includes a valve body 31b. The valve body 31b has a valve cavity, and the sliding block 2b is slidably mounted within the valve cavity. The valve seat 11b is fixedly connected to the valve body 31b, forming a seal between the sealing seat 12b and the open end face of the sliding block 2b.

The reversing valve provided in this embodiment utilizes the valve seat assembly 1b provided in the present disclosure and the sealing seat 12b is made of plastic, such that it is easy to achieve a high surface flatness, thereby meeting sealing requirements. In use, the sliding block 2b is capable of sliding smoothly and steadily on the surface of the sealing seat 12b, which is not susceptible to shaking or abnormal noise, thereby reducing wear and extending the service life of the reversing valve.

The technical solution of this embodiment will be described in detail below using a four-way valve as an example of the reserving valve.

In an embodiment, the valve body assembly 1b further includes an inlet connecting pipe. The valve body 31b has a mounting hole 311b in communication with the valve cavity. The inlet connecting pipe is fixedly connected to the valve body 31b and is in communication with the valve cavity. The valve seat 11b is inserted into the mounting hole 311b, and a circumferential surface of the valve seat 11b is fixedly connected to a hole wall of the mounting hole 311b.

For example, the inlet connecting pipe is fixedly connected to the valve body 31b, and the inlet-outlet connecting pipes are fixedly mounted on the valve seat 11b and in communication with the through holes 111b. The sealing seat 12b is injection-molded onto the valve seat 11b fixedly mounted with the inlet-outlet connecting pipes, the valve seat 11b is inserted into the mounting hole 311b, and the circumferential surface of the valve seat 11b is fixedly connected to the hole wall of the mounting hole 311b.

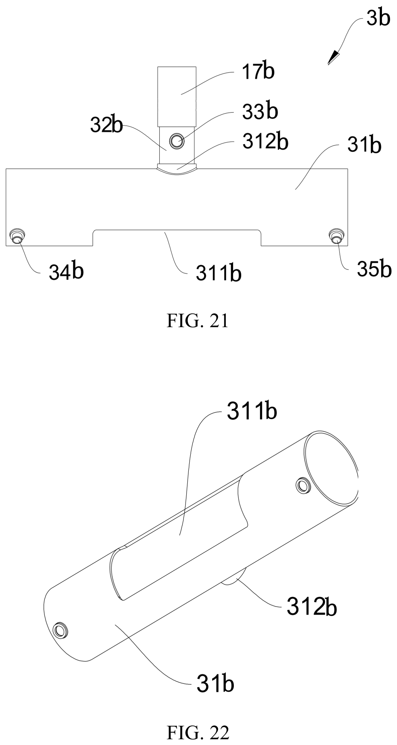

For the four-way valve, the inlet connecting pipe is the D-connecting pipe 32b. The D-connecting pipe 32b is mounted on the connecting port 312b (as shown in FIG. 21) located on a side of the valve body 31b facing away from the mounting hole 311b. A position of the D-connecting pipe 32b corresponds to that of the S-connecting pipe 13b.

The sliding block 2b is movable within the valve cavity to achieve the switching of different flow paths. For example, when the sliding block 2b moves to the end of the valve body 31b close to the E-connecting pipe 14b as shown in FIG. 12, the D-connecting pipe 32b is in communication with the C-connecting pipe 15b, and the E-connecting pipe 14b is in communication with the S-connecting pipe 13b. When the sliding block 2b moves to a position shown in FIG. 20, the D-connecting pipe 32b is in communication with the E-connecting pipe 14b, and the C-connecting pipe 15b is in communication with the S-connecting pipe 13b.

In an embodiment, the four-way valve further includes a pilot valve (not shown). Referring to FIG. 21, the valve body assembly 1b includes a D-short connecting pipe 33b and an E-short connecting pipe 34b, and a C-short connecting pipe 35b, which are configured to be connected to capillary tubes of the pilot valve. The D-short connecting pipe 33b is welded and fixed to the D-connecting pipe 32b and is in communication therewith. The E-short connecting pipe 34b is welded and fixed to the end of the valve body 31b close to the E-connecting pipe 14b and is in communication therewith. The C-short connecting pipe 35b is welded and fixed to the end of the valve body 31b close to the C-connecting pipe 15b and is in communication therewith.

In an embodiment, as shown in FIG. 21, the valve body assembly 1b further includes a copper sleeve 17b connected to an end of the D-connecting pipe 32b.

In an embodiment, the circumferential surface of the valve seat 11b is welded to the hole wall of the mounting hole 311b.

In some embodiments, the circumferential surface of the valve seat 11b is welded to the hole wall of the mounting hole 311b by using laser welding.

In an embodiment, as shown in FIG. 22, the valve body 31b has a cylindrical tubular structure. A projection shape of the mounting hole 311b on a reference plane is a rectangle, a rounded rectangle, or an obround shape. The reference plane is a plane perpendicular to a depth direction of the mounting hole 311b. The valve seat 11b has at least one cross-section with a contour shape matching the projection shape of the mounting hole 311b. The cross-section of the valve seat 11b is parallel to the surface of the sealing seat 12b away from the valve seat 11b.

In this embodiment, as shown in FIGS. 9 and 11, the valve seat 11b is a rectangular plate-like or block-like structure having a uniform thickness. The circumferential surface of the valve seat 11b is perpendicular to a second surface of the valve seat 11b, and the cross-section of the valve seat 11b is parallel to the upper surface 1ab. Therefore, the contour shape of each cross-section of the valve seat 11b matches the projection shape of the mounting hole 311b.

For example, the cross-section of the valve seat 11b is perpendicular to a depth direction of the through hole 111b.

It should be understood that the contour shapes of cross-sections at different positions of the valve seat 11b also be different. It is sufficient for the contour shape of the cross-section at the position corresponding to the mounting hole 311b to match the projection shape of the mounting hole 311b when the valve seat 11b is aligned with the mounting hole 311b and inserted at a specific position within the mounting hole 311b, so as to facilitate welding and sealing between the valve seat 11b and the valve body 31b.

It should be noted that the shape of the valve seat 11b may be determined according to a shape of the mounting hole 311b, or conversely, the shape of the mounting hole 311b may be determined according to the shape of the valve seat 11b.

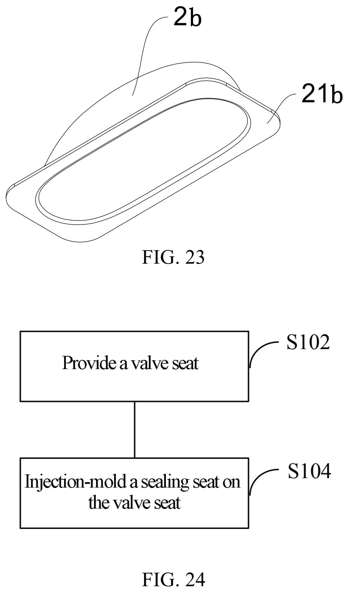

In an embodiment, as shown in FIG. 23, the sliding block 2b is configured as a housing having an opening. A flange 21b is provided at an edge of the opening. The flange 21b is in contact with the sealing seat 12b to form a sliding seal.

In an embodiment, the sliding block 2b is made of metal or alloy. Since the sealing seat 12b is made of plastic, the sliding block 2b may be made of metal or alloy. Compared to a sliding block made of plastic, the sliding block 2b made of metal or alloy in this embodiment offers greater structural strength and is less prone to fracturing.

For example, the sliding block 2b may be made of stainless steel, aluminum, copper, or brass.

It should be noted that the material of the sliding block 2b is not limited to metal or alloy, as long as it meets the strength requirements.

This embodiment also provides a method for producing a valve seat assembly, including the following steps:
providing a valve seat 11b; and
injection-molding a sealing seat 12b onto the valve seat 11b.

The valve seat assembly production method provided in this embodiment, injection molding the sealing seat 12b onto the valve seat 11b by injection molding, enables the valve seat 11b and valve seat 11b to be formed as an integral unit, leading to a simple process which is easy to implement. Since the sealing seat 12b is made of plastic, it is easy to achieve high surface flatness, thereby meeting sealing requirements. In use, the valve seat assembly produced by the method of this embodiment is mounted onto the valve body 31b of the reversing valve. When the sealing seat 12b forms a seal with the open end face of the sliding block 2b inside the valve body 31b, the sliding block 2b can slide smoothly and steadily on the surface of the sealing seat 12b, which is not susceptible to shaking or abnormal noise, thereby reducing wear.

For example, the method for producing the valve seat assembly provided in this embodiment is used to produce the valve seat assembly provided in the present disclosure.

The method for producing the valve seat assembly provided in this embodiment will be described in detail below using a four-way valve as an example of the valve seat assembly.

Referring to FIG. 24, the method for producing the valve seat assembly provided in this embodiment includes the following steps.

Step S102, the valve seat 11b is provided.

Step S104, the sealing seat 12b is injection-molded onto the valve seat 11b.

In step S104, the sealing seat 12b is injection-molded onto the valve seat 11b using an injection molding equipment. The injection molding equipment is the related art, and it is sufficient to select an appropriate injection mold cavity according to actual production requirements.

The structure of the valve seat assembly prepared according to step S104 in FIG. 24 is shown in FIG. 9.

In an embodiment, in step S102, the valve seat 11b is formed with through holes 111b. For example, the through holes 111b are machined on the plate-shaped or block-shaped valve seat 11b, and a machining process for the through holes 111b is the related art.

For example, as shown in FIG. 11, three through holes 111b are machined on the valve seat 11b, with the three through holes 111b spaced apart in the length direction of the valve seat 11b.

Before performing step S104, the method further includes:
Step S1032, inlet-outlet connecting pipes are provided. For example, the inlet-outlet connecting pipes include an S-connecting pipe 13b, an E-connecting pipe 14b, and a C-connecting pipe 15b.

Step S1034, the inlet-outlet connecting pipes are fixedly connected to the valve seat 11b, with the inlet-outlet connecting pipes in communication with through holes 111b. Specifically, the S-connecting pipe 13b is located between the E-connecting pipe 14b and the C-connecting pipe 15b. An end of the S-connecting pipe 13b is welded to the through hole 111b located in the middle, and the E-connecting pipe 14b and the C-connecting pipe 15b are respectively welded to the through holes 111b located at both ends.

In an embodiment, in the step of fixedly connecting the inlet-outlet connecting pipes to the valve seat 11b, the inlet-outlet connecting pipes are brazed to the valve seat 11b by furnace brazing.

Specifically, in step S1034, the S-connecting pipe 13b, the E-connecting pipe 14b, and the C-connecting pipe 15b are brazed to their respective corresponding through holes 111b by furnace brazing.

In an embodiment, before performing step S104, the method further includes:
Step S1036, a short connecting pipe is provided. For example, the short connecting pipe in the valve seat assembly includes an S-short connecting pipe 16b.

Step S1038, the short connecting pipe and the inlet-outlet connecting pipes are brazed to the valve seat 11b by furnace brazing.

Specifically, the S-connecting pipe 13b, the E-connecting pipe 14b, and the C-connecting pipe 15b are mounted into their respective corresponding through holes 111b, the S-short connecting pipe 16b are mounted at a corresponding position of the S-connecting pipe 13b, and then they are placed together into a brazing furnace for brazing. In this way, the production efficiency can be improved.

It should be noted that ends of the S-connecting pipe 13b, the E-connecting pipe 14b, and the C-connecting pipe 15b of the four-way valve are each connected to a copper sleeve 17b. Each copper sleeve 17b may be mounted at one end of the corresponding one of the S-connecting pipe 13b, the E-connecting pipe 14b, and the C-connecting pipe 15b, and then they are placed together into the brazing furnace for brazing. In this way, the production efficiency can be further improved.

Certainly, the short connecting pipe and the copper sleeves 17b may be welded separately.

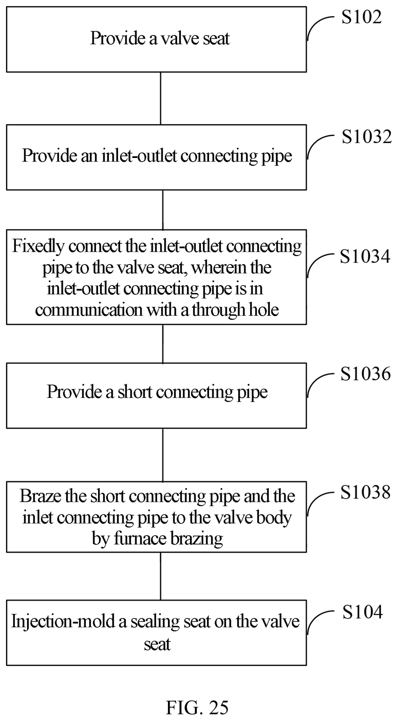

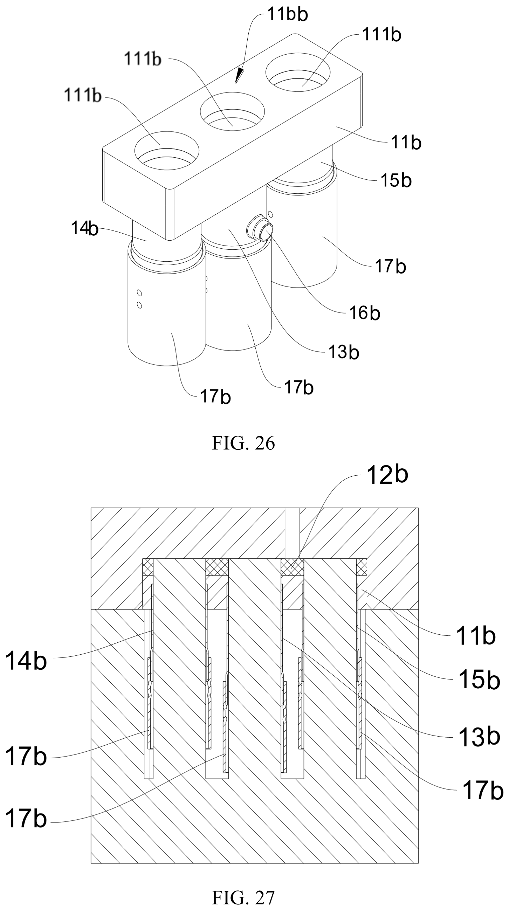

FIG. 26 shows a schematic structural view of a valve seat assembly prepared according to step S1038 in FIG. 25 in a state where the sealing seat 12b is not yet injection-molded. As shown in FIG. 26, the sealing seat 12b has not yet been injection-molded onto the valve seat 11b. That is, when performing step S104 in FIG. 25, injection-molding is performed based on a structure shown in FIG. 26. As shown in FIG. 27, the structure shown in FIG. 26 is placed in the injection molding equipment, and the sealing seat 12b is molded onto the valve seat 11b. After injection-molding, the valve seat assembly obtained is as shown in FIG. 10.

After the valve seat 11b, the S- connecting pipe 13b, the E-connecting pipe 14b, the C-connecting pipe 15b, and the S-short connecting pipe 16b are brazed to the copper sleeves 17b, the sealing seat 12b is then injection-molded onto the valve seat 11b, so as to prevents the high temperature in the brazing furnace from melting the sealing seat 12b.

In an embodiment, in step S102, the valve seat 11b is formed with a reinforcing portion. For example, the reinforcing portion includes: a first reinforcing portion 112b machined on the first surface 11bb of the valve seat 11b; and/or a second reinforcing portion 113b machined on the circumferential surface of the valve seat 11b. For example, the reinforcing portion includes at least one of a blind hole, a through groove, an annular groove, or a protrusion.

The structure and arrangement of the reinforcing portion also refer to FIGS. 12 to 17 and are not repeated herein.

It should be noted that the machining sequence of the through holes 111b and the reinforcing portion on the valve seat 11b may be selected according to actual production and machining requirements.

This embodiment further provides a method for producing a reversing valve, including the following steps:
providing a valve body assembly 3b, a valve seat assembly 1b, and a sliding block 2b; in which the provided valve body assembly 3b includes a valve body 31b having a valve cavity; the provided valve seat assembly 1b is prepared using the method for producing the valve seat assembly provided in this embodiment;
slidably mounting the sliding block 2b into the valve cavity of the valve body assembly 1b; and
fixedly mounting the valve seat assembly 1b onto the valve body 31b, in which the sealing seat 12b forms a seal with an open end face of the sliding block 2b.

In the method for producing the reversing valve provided in this embodiment, the valve seat assembly are prepared using the method for producing the reversing valve provided in the present disclosure, such that the sealing seat 12b are injection-molded with the valve seat 11b to form an integral unit, leading to a simple process which is easy to implement. Since the sealing seat 12b is made of plastic, it is easy to achieve high surface flatness, thereby meeting sealing requirements. In use, the sliding block 2b can slide smoothly and steadily on the surface of the sealing seat 12b, which is not susceptible to shaking or abnormal noise, thereby reducing wear and extending the service life of the reversing valve.

For example, the method for producing the reversing valve provided in this embodiment is used to manufacture the reversing valve provided in this embodiment.

The method for producing the valve seat assembly provided in this embodiment will be described in detail below using a four-way valve as an example of the valve seat assembly.

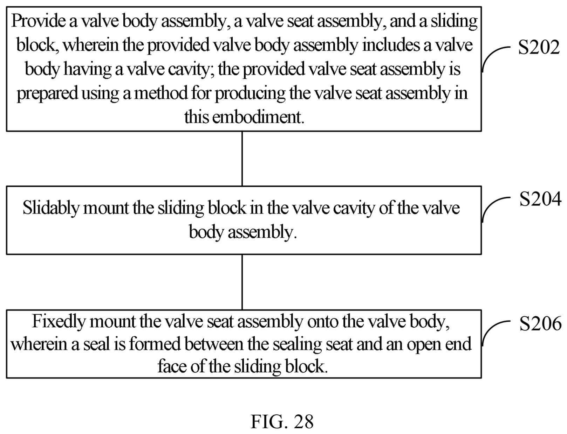

Referring to FIG. 28, the method for producing the reversing valve provided in this embodiment includes the following steps:
Step S202, a valve body assembly 3b, a valve seat assembly 1b, and a sliding block 2b are provided. The provided valve body assembly 3b includes a valve body 31b having a valve cavity. The provided valve seat assembly 1b is prepared using the method for producing the valve seat assembly provided in this embodiment.

For example, the valve body 31b has a cylindrical tubular structure with end caps (not shown) at its two ends, and an inner cavity of the cylindrical tubular structure is configured as the valve cavity.

For example, the provided valve seat assembly is prepared using the method for producing valve seat assembly shown in FIG. 25.

Step S204, the sliding block 2b is slidably mounted in the valve cavity of the valve body assembly.

For example, the sliding block 2b is rotated into the valve cavity from an end of the valve body 31b. Since the sealing seat 12b is made of plastic, such as nylon or polyphenylene sulfide (PPS), the sliding block 2b provided in this embodiment may be made of metal or alloy. The sliding block 2b made of metal or alloy has higher structural strength and is less prone to fracture during use.

Step S206, the valve seat assembly is fixedly mounted onto the valve body 31b, in which a seal is formed between the sealing seat 12b and the open end face of the sliding block 2b.

For example, as shown in FIG. 23, an edge of the opening of the sliding block 2b is provided with a flange 21b. The flange 21b is in contact with the sealing seat 12b to form a sliding seal.

In an embodiment, in the step of providing the valve body assembly, as shown in FIG. 22, a mounting hole 311b is formed in the valve body 31b, with the mounting hole 311b in communication with the valve cavity; and the provided valve body assembly further includes an inlet connecting pipe, which fixedly connected to the valve body 31b, with the inlet connecting pipe in communication with the valve cavity.

Specifically, a projection shape of mounting hole 311b in a plane perpendicular to its depth direction may be a rectangle, a rounded rectangle, or an obround shape. As shown in FIG. 22, a connecting port 312b is machined on the valve body 31b. For example, the connecting port 312b is opposite to the mounting hole 311b and is in communication with the valve cavity. The inlet connecting pipe is a D-connecting pipe 32b, which is fixedly mounted at the connecting port 312b.

In an embodiment, in the step of fixedly connecting the inlet connecting pipe to the valve body 31b, the inlet connecting pipe is brazed to the valve body 31b using furnace brazing.

Specifically, the D-connecting pipe 32b is brazed to the connecting port 312b on valve body 31b.

In an embodiment, in the step of providing the valve body assembly 3b, the provided valve body assembly 3b further includes a short connecting pipe, the short connecting pipe, and the inlet connecting pipe are brazed to the valve body 31b using furnace brazing.

Specifically, the four-way valve further includes a pilot valve (not shown), as shown in FIG. 21, the short connecting pipes in the valve body assembly 3b include a D-short connecting pipe 33b, an E-short connecting pipe 34b, and a C-short connecting pipe 35b.

Specifically, the D-connecting pipe 32b is mounted at the connecting port 312b of the valve body 31b, the D-short connecting pipe 33b is mounted at a corresponding position of the D-connecting pipe 32b, the E-short connecting pipe 34b is mounted at an end of the valve body 31b close to the E-connecting pipe 14b, and the C-short connecting pipe 35b is mounted at an end of the valve body 31b close to the C-connecting pipe 15b; and then they are placed together into a brazing furnace for brazing. In this way, the production efficiency is improved.

It should be noted that, as shown in FIG. 21, an end of the D-connecting pipe 32b of the four-way valve is further connected with a copper sleeve 17b. The copper sleeve 17b may be mounted at the end of the D-connecting pipe 32b, and then they are placed together into the brazing furnace for brazing. In this way, the production efficiency is further improved.

In an embodiment, the step of fixedly mounting the valve seat assembly 1b to the valve body 31b includes: the valve seat 11b of the valve seat assembly 1b is inserted into the mounting hole 311b, and the circumferential surface of the valve seat 11b to is fixedly connected to the hole wall of the mounting hole 311b.

For example, the valve seat 11b in the valve seat assembly 1b, which is prepared using the method for producing the valve seat assembly 1b shown in FIG. 25, is inserted into the mounting hole 311b, and the circumferential surface of the valve seat 11b is fixedly connected to the hole wall of the mounting hole 311b.

In this embodiment, since the valve seat assembly 1b and the valve body assembly 3b are brazed in a furnace separately, a brazing furnace with a relatively small opening may be selected.

In an embodiment, in the step of fixedly connecting the circumferential surface of the valve seat 11b to the hole wall of the mounting bore 311b, the circumferential surface of the valve seat 11b is welded to the hole wall of the mounting bore 311b using laser welding.

Specifically, the brazed valve seat assembly 1b and valve body assembly 3b are taken out from the brazing furnace. The valve seat 11b in the valve seat assembly 1b is inserted into the mounting hole 311b, and the circumferential surface of the valve seat 11b is welded to the hole wall of the mounting hole 311b using laser welding.

During actual production, after taking out the brazed valve seat assembly 1b and valve body assembly 3b from the brazing furnace, the valve seat assembly 1b and the valve body assembly 3b assemblies may be inspected first. If welding quality issues are detected, since a flow soldering position of each connecting pipe is typically at the junction between the connecting pipe and the valve seat 21a, there is a large space for a grinding operation, and it is easy to rework. If deformation occurs on the surface of the valve seat 21a, it may be detected using tools such as a feeler gauge, The solder on the surface may be grinded off by using a grinding wheel, an electric grinder, or a file, so as to achieve the rework and the repair.

It should be understood that the present disclosure does not limit its application to the detailed structure and arrangement of the components mentioned in this specification. The present disclosure may have other embodiments and may be implemented and executed in various ways. The aforementioned variations and modifications fall into the scope of the present disclosure. It should be understood that the present disclosure, as disclosed and limited in this specification, extend to all alternative combinations of two or more individual features mentioned or apparent in the text and/or in the accompanying drawings. All of these different combinations constitute a plurality of alternative aspects of the present disclosure. The embodiments described in this specification illustrate the optimal ways known for implementing the present disclosure and will enable those skilled in the art to utilize the present disclosure.

## Claims

1. A reversing valve, comprising:
a valve body assembly comprising a valve body and an inlet connecting pipe, wherein the valve body has a valve cavity and a mounting hole in communication with the valve cavity, and the inlet connecting pipe is fixedly connected to the valve body and is in communication with the valve cavity; and
a valve seat assembly comprising a valve seat and an inlet-outlet connecting pipe, wherein the valve seat is provided with a through hole, the inlet-outlet connecting pipe is fixedly mounted on the valve seat and is in communication with the through hole; the valve seat is inserted into the mounting hole, and a circumferential surface of the valve seat is fixedly connected to a hole wall of the mounting hole.

2. The reversing valve according to claim 1, wherein the valve seat is provided with an upper surface and a lower surface, the upper surface and the lower surface are respectively located on two sides of the circumferential surface of the valve seat, the lower surface faces an interior of the valve body, and the upper surface is parallel to the lower surface.

3. The reversing valve according to claim 2, wherein an edge, connected to the lower surface, of the circumferential surface of the valve seat has at least a portion welded to the hole wall of the mounting hole.

4. The reversing valve according to any one of claims 1 to 3, wherein a projection shape of the mounting hole onto a plane perpendicular to a depth direction of the mounting hole is a rectangle, a rounded rectangle, or an obround shape; the valve seat has at least one cross-section with a contour shape matching the projection shape of the mounting hole; and a cross-section of the valve seat is perpendicular to a depth direction of the through hole.

5. The reversing valve according to claim 1, comprising a sealing seat and a sliding block, wherein the sealing seat is made of plastic, the sealing seat is integrated with the valve seat by injection molding, the sliding block is slidably mounted in the valve cavity, and the sealing seat is configured to form a seal with an open end face of the sliding block.

6. The reversing valve according to claim 5, wherein an outer surface of the valve seat and the sealing seat comprises an upper surface, a lower surface, and a circumferential outer surface disposed in a surrounding manner between the upper surface and the lower surface; the upper surface is a surface of the sealing seat facing away from the valve seat and is a plane; the lower surface is a surface of the valve seat facing away from the sealing seat; and the through hole penetrates the upper surface and the lower surface.

7. The reversing valve according to claim 6, wherein the upper surface is parallel to the lower surface.

8. The reversing valve according to claim 5, wherein the valve seat is provided with a reinforcing portion, and a surface of the reinforcing portion is in contact with the sealing seat.

9. The reversing valve according to claim 8, wherein the valve seat has a first surface and a second surface opposite to each other, and a circumferential surface disposed in a surrounding manner between the first surface and the second surface; and the reinforcing portion comprises a first reinforcing portion disposed on the first surface of the valve seat;
and/or, the reinforcing portion comprises a second reinforcing portion disposed on the circumferential surface of the valve seat.

10. The reversing valve according to claim 8, wherein the reinforcing portion comprises at least one of a blind hole, a through groove, an annular groove, or a protrusion.

11. The reversing valve according to claim 5, wherein the sliding block is made of metal or alloy.

12. A method for producing a reversing valve, comprising steps:
producing a valve body assembly;
producing a valve seat assembly; and
fixedly mounting the valve seat assembly onto the valve body assembly;
wherein:
the step of producing the valve body assembly comprises:
providing a valve body and an inlet connecting pipe, wherein the valve body has a valve cavity, the valve body is provided with a mounting hole, and the mounting hole is in communication with the valve cavity; and
fixedly connecting the inlet connecting pipe to the valve body, wherein the inlet connecting pipe is in communication with the valve cavity;
the step of producing the valve seat assembly comprises:
providing a valve seat and an inlet-outlet connecting pipe, a through hole being provided in the valve seat; and
fixedly connecting the inlet-outlet connecting pipe to the valve seat, wherein the inlet-outlet connecting pipe is in communication with the through hole;
the step of fixedly mounting the valve seat assembly onto the valve body assembly comprises:
inserting the valve seat of the valve seat assembly into the mounting hole, and fixedly connecting a circumferential surface of the valve seat to a hole wall of the mounting hole.

13. The method for producing the reversing valve according to claim 12, wherein in the step of fixedly connecting the inlet connecting pipe to the valve body to form the valve body assembly, the inlet connecting pipe is brazed to the valve body by furnace brazing.

14. The method for producing the reversing valve according to claim 12, wherein in the step of fixedly connecting the inlet-outlet connecting pipe to the valve seat to form the valve seat assembly, the inlet-outlet connecting pipe is brazed to the valve seat by furnace brazing.

15. The method for producing the reversing valve according to claim 12, wherein in the step of fixedly connecting the circumferential surface of the valve seat to the hole wall of the mounting hole, the circumferential surface of the valve seat is welded to the hole wall of the mounting hole by laser welding.

16. The method for producing the reversing valve according to claim 13, wherein the step of producing the valve body assembly further comprises:
providing a short connecting pipe; and
brazing the short connecting pipe and the inlet connecting pipe to the valve body by furnace brazing.

17. The method for producing the reversing valve according to claim 14, wherein the step of producing the valve seat assembly further comprises:
providing a short connecting pipe; and
brazing the short connecting pipe and the inlet-outlet connecting pipe to the valve seat by furnace brazing.

18. The method for producing the reversing valve according to claim 12, wherein, after the step of fixedly connecting the inlet-outlet connecting pipe to the valve seat, the method further comprises a following step:
injection-molding a sealing seat onto the valve seat.

19. The method for producing the reversing valve according to claim 18, wherein in the step of providing the valve seat, the valve seat is formed with a reinforcing portion, and the reinforcing portion comprises at least one of a blind hole, a through groove, an annular groove, or a protrusion.

20. The method for producing the reversing valve according to claim 18 or 19, further comprising following steps:
providing a sliding block; and slidably mounting the sliding block in a valve cavity of the valve body assembly;
wherein a seal is formed between the sealing seat and an open end face of the sliding block.
